# EUROPÄISCHE PATENTANMELDUNG

(11) **EP 3 854 506 A1**
(43) Veröffentlichungstag der Anmeldung: **28.07.2021**
(21) Anmeldenummer: 20207675.8
(22) Anmeldetag: 16.11.2020
(51) Int. Cl.: B23D 25/00, B23D 31/00, B23D 35/00, B23D 36/00

(54) **VORRICHTUNG UND VERFAHREN ZUM QUERTEILEN EINES METALLBANDES IN EINER WALZSTRASSE**

(30) Priorität: 11.12.2019 DE 102019219308
(71) Anmelder: SMS Group GmbH, 40237 Düsseldorf (DE)
(72) Erfinder: Runkel, Thomas, 57074 Siegen (DE); Hoen, Karl, 53567 Asbach (DE); Ehls, Bernhard, 57271 Hilchenbach (DE)
(74) Vertreter: Klüppel, Walter

(57) **Zusammenfassung**

Die Erfindung betrifft ein Vorrichtung zum Querteilen eines Metallbandes (5) in einer Walzstraße (4) umfassend Mittel zur Bestimmung der Dicke und/oder der Geschwindigkeit des Metallbandes (5), eine erste Trenneinrichtung (2) und wenigstens eine zweite Trenneinrichtung (3), die für unterschiedliche Schnittanforderungen ausgelegt sind, Mittel zur Auswahl und Inbetriebnahme der ersten und/oder zweiten Trenneinrichtung (2,3) in Abhängigkeit der Dicke und/oder Geschwindigkeit des Metallbandes (5), dadurch gekennzeichnet, dass die erste und die zweite Trenneinrichtung (2,3) quer zur Laufrichtung des Metallbandes (5) verfahrbar angeordnet sind und dass die erste und zweite Trenneinrichtung (2,3) wahlweise oder wechselweise in die Walzlinie einfahrbar und/oder ausfahrbar ausgebildet sind.

## Beschreibung

Die Erfindung betrifft eine Vorrichtung zum Querteilen eines Metallbandes in einer Walzstraße umfassend Mittel zur Bestimmung der Dicke und/oder der Geschwindigkeit des Metallbandes, eine erste Trenneinrichtung und wenigstens eine zweite Trenneinrichtung, die für unterschiedliche Schnittanforderungen ausgelegt sind sowie Mittel zur Auswahl und Inbetriebnahme der ersten und/oder zweiten Trenneinrichtung in Abhängigkeit der Dicke und/oder Geschwindigkeit des Metallbandes.

Die Erfindung betrifft weiterhin ein Verfahren zum Querteilen eines Metallbandes unter Verwendung der vorstehend beschriebenen Vorrichtung.

In Warmwalzwerken werden Bänder mit unterschiedlichen Enddicken und entsprechend unterschiedlichen Walzgeschwindigkeiten gewalzt und anschließend mittels Haspeln zu Coils aufgewickelt. Um diese Aufgabe bewältigen zu können, müssen verschiedene Trenneinrichtungen eingesetzt werden, welche für verschiedene Schnittanforderungen ausgelegt sind. Beispielsweise ist es üblich, Trommelscheren zum Querschneiden von Banddicken von 5 bis 25,4 mm bei Bandgeschwindigkeiten von 0,5 bis 3,5 m/s einzusetzen. Zum Querschneiden von Banddicken von 0,6 bis 6 mm bei Bandgeschwindigkeiten von 2,5 bis 20 m/s werden häufig Hochgeschwindigkeitsscheren eingesetzt. Weiterhin finden je nach Materialgeschwindigkeit, Materialfestigkeit, Materialtemperatur und Produktionsfolge auch Pendelscheren, Kurbelscheren und Brennschneideinrichtungen Anwendung.

Aus der DE 2522654 A1 ist eine Wechselvorrichtung für Kreismesserscheren zum Längsteilen von Metallband bekannt, die aus wenigstens zwei quer zum Band auf Laufschienen verfahrbaren Wechselwagen zur Aufnahme je einer Kreismesserschere des gleichen Typs ausgebildet ist, wobei der in Arbeitsposition der in der Scherenlinie befindliche Wechselwagen zum Austausch mit einem anderen Wechselwagen bis außerhalb des Platzbedarfs für die Arbeitsposition verfahrbar ist. Die Laufschienen erstrecken sich zu beiden Seiten der Scherenlinie um jeweils mindestens die Länge des Platzbedarfs für einen Wechselwagen. Diese Anordnung dient dazu, bedarfsweise die eine oder andere Schere zum Nacharbeiten außer Betrieb zu nehmen. Neben dem jeweils in Arbeitsposition befindlichen Wechselwagen wird ein Wechselwagen mittels Kran auf die Laufschiene aufgesetzt, dessen Schere in der Werkstatt auf das nächste Schneidprogramm eingerichtet wurde. Für die beiden Scheren gleichen Typs ist ein einziger Antrieb vorgesehen, der mittels eines an jedem Wechselwagen vorgesehenen Winkelgetriebes anschließbar ist.

Die Veröffentlichung EP 1 868 748 B1 beschreibt eine Warmwalzanlage, in welcher mehrere alternative Trenneinrichtungen in der Walzlinie hintereinander angeordnet sind. Die Trenneinrichtungen sind mittels eines Steuerungssystems bedarfsweise auswählbar.

Eine Vorrichtung und ein Verfahren der eingangs genannten Art sind beispielsweise aus der WO 2019/052902 A1 bekannt. Diese Druckschrift betrifft ein Verfahren und eine Vorrichtung zum Querteilen eines Warmbandes, wobei das Verfahren eine Dickenbestimmung des Warmbandes, das Auswählen einer ersten Trommelschere für ein dickes Warmband oder einer zweiten Trommelschere für ein dünnes Warmband aufgrund der Dicke des Warmbandes umfasst, wobei für ein dickes Warmband mit einer Dicke von 4 bis 28 mm eine erste Trommelschere ausgewählt wird und für ein dünnes Warmband mit einer Dicke von 0,6 mm bis 6 mm und einer Bandlaufgeschwindigkeit größer als 1,5 m/s eine zweite Trommelschere ausgewählt wird. Die erste und die zweite Trommelschere sind in der Walzlinie hintereinander angeordnet.

Eine solche Anordnung der Scheren in Materialflussrichtung hintereinander verlängert die Walzstraße unter Verursachung höherer Investitionskosten und höherer Wärmeverluste beim Betrieb.

Der Erfindung liegt die Aufgabe zugrunde, eine Vorrichtung sowie ein Verfahren bereitzustellen, mit welchem insbesondere dieser Nachteil vermieden wird.

Die der Erfindung zugrunde liegende Aufgabe wird gelöst durch die Merkmale der Vorrichtung gemäß Anspruch 1 sowie durch die Merkmale des Verfahrens gemäß Anspruch 14. Vorteilhafte Ausgestaltungen der Erfindung ergeben sich aus den Unteransprüchen.

Nach einem ersten Gesichtspunkt der Erfindung wird eine Vorrichtung zum Querteilen eines Metallbandes in einer Walzstraße bereitgestellt, wobei die Vorrichtung Mittel zur Bestimmung der Dicke und/oder der Geschwindigkeit des Metallbandes, eine erste Trenneinrichtung und wenigstens eine zweite Trenneinrichtung, die für unterschiedliche Schnittanforderungen ausgelegt sind, sowie Mittel zur Auswahl und Inbetriebnahme der ersten und/oder zweiten Trenneinrichtung in Abhängigkeit der Dicke und/oder Geschwindigkeit des Metallbandes umfasst. Die Vorrichtung gemäß der Erfindung zeichnet sich insbesondere dadurch aus, dass die erste und zweite Trenneinrichtung quer zur Laufrichtung des Metallbandes verfahrbar angeordnet sind und dass die erste und zweite Trenneinrichtungen wahlweise oder wechselweise in die Walzlinie einfahrbar und/oder ausfahrbar ausgebildet sind.

Die Vorrichtung gemäß der Erfindung kann Teil einer kontinuierlichen oder diskontinuierlichen Gießwalzanlage sein. Diese kann beispielsweise hinter den Walzgerüsten oder vor Haspels zum Aufwickeln des Metallbandes zu Coils angeordnet sein.

Erfindungsgemäß sind also die verschiedenen Trenneinrichtungen quer zur Laufrichtung des Metallbandes verschiebbar, sodass wahlweise, je nach Schnittanforderung, die eine oder die andere Trenneinrichtungen in die Walzlinie eingeschoben oder eingefahren werden kann. Die Begriffe verschiebbar einerseits und verfahrbar andererseits werden im Sinne der vorliegenden Anmeldung synonym verwendet. Durch die Anordnung der Trenneinrichtungen quer zur Materialflussrichtung kann ein wesentlich größerer Schnittbereich abgedeckt werden, ohne die Anlage dadurch zu verlängern. Dadurch ergibt sich eine Einsparung von Anlagenlänge und Investitionskosten, eine Reduzierung von Wärmeverlusten in der Produktion sowie eine Erhöhung der Flexibilität bei der Produktion.

Bei einer bevorzugten Variante der Vorrichtung gemäß der Erfindung ist vorgesehen, dass die erste und die zweite Trenneinrichtungen gleichzeitig oder wechselweise neben der Walzlinie in eine Parkposition verfahrbar sind. Dabei können die erste und die zweite Trenneinrichtung aus der Walzlinie an gegenüberliegenden Seiten der Walzstraße neben die Walzlinie verfahrbar sein. Alternativ kann vorgesehen sein, dass die erste und die zweite Trenneinrichtung aus der Walzlinie an einer einzigen Seite der Walzstraße derart verfahrbar sind, dass sie parallel zur Walzlinie nebeneinander angeordnet sind.

Wenn die erste und die zweite Trenneinrichtung an gegenüberliegenden Seiten auf gleicher Höhe der Walzstraße in die Walzlinie einfahrbar und aus der Walzlinie ausfahrbar sind können diese einander gegenüberliegend so angeordnet sein, dass sie wechselweise in die Walzlinie eingefahren und ausgefahren werden können, sodass immer eine Trenneinrichtung in der Walzlinie angeordnet ist.

Alternativ können die erste und zweite Trenneinrichtung an gegenüberliegenden Seiten auf verschiedener Höhe der Walzstraße in die Walzlinie einfahrbar und aus der Walzlinie ausfahrbar sein. In diesem Fall ist es sinnvoll und zweckmäßig jeweils gegenüberliegend einer Trenneinrichtung auf gleicher Höhe einen Zwischenrollgang anzuordnen, der in die Walzlinie eingefahren werden kann, wenn die betreffende Trenneinrichtung nicht betrieben werden soll.

Wenn die erste und die zweite Trenneinrichtung an einer einzigen Seite der Walzstraße derart verfahrbar sind, dass sie parallel zur Walzlinie nebeneinander angeordnet sind oder parallel zur Walzlinie nebeneinander gepackt werden können, ist es zweckmäßig, dass diese so ausgebildet sind, dass sie sowohl parallel zur Walzlinie als auch quer zur Walzlinie verfahrbar bzw. verschiebbar sind.

In diesem Fall ist es zweckmäßig, wenn ein Zwischenrollgang vorgesehen ist, der in die Walzlinie eingefahren werden kann, wenn sich beide Trenneinrichtungen in der Parkposition befinden.

Die erste und die zweite Trenneinrichtung können ausgewählt sein aus einer Gruppe von Trenneinrichtungen umfassend Trommelscheren, die als Querteiler und/oder als Schopfscheren und/oder als Häcksler ausgebildet sind, Trommelscheren, die als Hochgeschwindigkeitsscheren ausgebildet sind, Pendelscheren, Brennschneideinrichtungen sowie Kurbelscheren.

Bevorzugt sind die Trenneinrichtungen gemäß der Erfindung als erste und zweite Schere ausgebildet oder umfassen jeweils eine Schere.

Alternativ kann beispielsweise die erste Trenneinrichtung als Trommelschere ausgebildet sein, wohingegen die zweite Trenneinrichtung als Hochgeschwindigkeit-Trommelschere oder als Pendelschere oder als Brennschneideinrichtung ausgebildet ist. Beliebige Kombinationen sind im Rahmen der Erfindung möglich.

Wenigstens eine Schere kann mit bogenförmigen Messern versehen sein. Mit solchen bogenförmigen Messern kann der Bandkopf abgerundet werden, sodass dieser in nachfolgenden Einrichtungen der Walzstraße leichter transportiert werden kann und ein Verschleiß an den weiteren Einrichtungen vermindert wird.

Wenigstens eine Schere kann mit einer Messerspaltverstellung versehen sein. Die Messerspaltverstellung ist zweckmäßigerweise so ausgebildet, dass diese automatisch mittels eines Steuerungssystems bewirkt werden kann.

Bei einer besonders bevorzugten Variante der Vorrichtung gemäß der Erfindung ist eine erste Trenneinrichtung als Trommelschere und eine zweite Trenneinrichtung als Hochgeschwindigkeits-Trommelschere ausgebildet.

Die Trommelschere besitzt zwei übereinanderliegende Messertrommeln, in die Messer eingebaut sind. Die Messertrommeln sind in einem festen Abstand zueinander drehbar in Scherenständern gelagert. Die Hochgeschwindigkeits-Trommelschere besitzt Messertrommeln, die in vertikaler Richtung zueinander verstellbar sind. Die Messertrommeln können so verstellt werden, dass sie sich drehen, ohne einen Schnitt auszulösen. Die Messertrommeln werden beispielsweise mit geringer Geschwindigkeit permanent gedreht. Zum Schnitt werden die Messertrommeln vorzugsweise mit mehreren Umdrehungen auf die Bandgeschwindigkeit beschleunigt. Erst zum Schnitt werden die Messertrommeln vertikal zugestellt.

Die erste Trenneinrichtung kann als Trommelschere für eine Banddicke von 6 bis 28 mm bei einer Bandgeschwindigkeit von kleiner gleich 2,5 m/s ausgebildet sein, wohingegen die zweite Trenneinrichtung als Hochgeschwindigkeits-Trommelschere für eine Banddicke von 0,6 bis 6 mm bei einer Bandgeschwindigkeit von 2,5 bis 20 m/s ausgelegt sein kann. Mit einer solchen Kombination kann ein größtmöglicher Bereich von verschiedenen Schnittanforderungen erfüllt werden. Die angegebenen Schnittwerte sind nur als Beispiel zu sehen. Im konkreten Einsatzfall können diese Bereiche auch weiter oder enger gefasst werden.

Die Trommelscheren können so ausgebildet sein, dass sie einseitig, d. h. auf ihrer der Walzlinie zugekehrten Seite geöffnet sind, sodass sie während der laufenden Produktion in die Walzlinie eingefahren oder aus der Walzlinie ausgefahren werden können. Dies kann vorzugsweise mit einer einseitig fliegenden Lagerung der Messertrommeln erreicht werden.

Sind als Trenneinrichtungen Scheren vorgesehen oder umfassen diese jeweils eine Schere, so kann wenigstens eine der Scheren auch zum Schopfen des Metallbandes ausgelegt sein. In diesem Fall ist es vorteilhaft, wenn unterhalb der betreffenden Schere in der Walzlinie eine Schrottabfuhr vorgesehen ist. Hierfür kann in der Walzlinie ein entsprechender Bunker mit einem Förderband oder mindestens ein verfahrbarer Schrottkübel vorgesehen sein.

An dieser Stelle sei angemerkt, dass der Begriff "Schere" sowohl das eigentliche Werkzeug als auch eine Anordnung des Werkzeugs mit einem Antrieb, Getriebe und Kupplung umfassen kann. Im Sinne der vorliegenden Anmeldung umfasst der verwendete Begriff Schere oder Trommelschere das Werkzeug mit Antrieb, Getriebe und Kupplung sofern nicht ausdrücklich auf das Werkzeug Bezug genommen wird.

Für die Verschiebung der Trenneinrichtungen bzw. Scheren kann in der Walzstraße wenigstens eine Fahrbahn bzw. Scherengasse vorgesehen sein, durch die eine erste oder eine zweite Schere oder ein Zwischenrollgang in die Walzlinie einfahrbar oder ausfahrbar ist.

Die Trenneinrichtungen können jeweils mittels eines an sich bekannten vorzugsweise hydraulischen Querverschiebesystems verfahrbar sein.

Bei einer bevorzugten Variante der Vorrichtung gemäß der Erfindung kann in Laufrichtung des Metallbandes vor und/oder hinter den Trenneinrichtungen wenigstens einer Treibereinrichtung, insbesondere wenigstens eine Treibrolleneinheit vorgesehen sein. Der optimale Bandzug kann gegenüber vorgelagerten Einrichtungen, wie z.B. den Walzgerüsten oder auch nachgelagerten Einrichtungen, wie z. B. Haspel eingestellt werden. Wird vor und/oder hinter der Trenneinrichtung jeweils eine Treibereinrichtung eingesetzt, kann der Bandzug während des Schnitt definiert eingestellt werden, z.B. zuglos oder mit geringem Bandzug.

Die Treibeinrichtung dient zur Stabilisierung des Bandlaufs bei Durchführung eines Schnitts. Die Treibeinrichtung kann vorzugsweise in einer kombinierten Positions- /Kraftregelung arbeiten. Die Treibeinrichtung kann, wenn kein Schnitt erfolgt, zeitweise geöffnet sein bzw. zeitweise geschlossen sein, wenn ein Schnitt erfolgt. Mittels der wenigstens einen Treibeinrichtung kann ein definierter, für die aktuelle Schnittaufgabe optimierter Bandzug eingestellt werden.

Vorzugsweise umfasst die Vorrichtung ein Steuerungssystem, welches für wenigstens eine Treibeinrichtung den optimalen Zeitpunkt für das Aufsetzen oder Abheben und den optimalen Bandzug in Abhängigkeit der Dicke und/oder der Geschwindigkeit des Metallbandes bestimmt.

Vorteilhafterweise können für den stabileren Transport von dünnen Metallbändern vor und/oder nach den Trenneinrichtungen oberhalb des Materiallaufs angeordnet Führungseinrichtungen vorgesehen sein. Diese verhindern ein Abheben des Metallbandes im Bereich des Bandkopfes. Die Führungseinrichtungen können als mechanische Führungseinrichtungen ausgebildet sein. Alternativ kann eine Führung mit von oben wirkenden Medien, beispielsweise mittels Wasser oder Luft unter Druck bewirkt werden.

Nach einem weiteren Gesichtspunkt der Erfindung wird ein Verfahren zum Querteilen eines Metallbandes in einer Walzstraße unter Verwendung der vorstehend beschriebenen Vorrichtung bereitgestellt.

Vorzugsweise umfasst das Verfahren eine Bestimmung der Dicke und/oder Geschwindigkeit und/oder Beschaffenheit des Metallbandes, wobei in Abhängigkeit der Bandgeschwindigkeit und/oder der Banddicke und/oder der Beschaffenheit des Metallbandes die erste oder die zweite Trenneinrichtung ausgewählt und in die Walzlinie eingefahren wird.

Zweckmäßigerweise umfasst das Verfahren die automatische Einstellung des Bandzuges in Abhängigkeit der ausgewählten Trenneinrichtung, vorzugsweise unter Verwendung eines Steuerungssystems der vorbeschriebenen Art.

Zweckmäßigerweise ist vorgesehen, den Bandzug mittels wenigstens einer Treibeinrichtung einzustellen. Mittels des wenigstens einen Steuerungssystems kann Abhängigkeit der gewählten Trenneinrichtung und des durchzuführenden Schnitts der Zeitpunkt für das in- und außer Eingriff bringen der Treibereinrichtungen gesteuert werden.

Bei einer zweckmäßigen Variante des Verfahrens, das unter Verwendung von Scheren als Trenneinrichtungen durchgeführt wird, die über eine Messerspaltverstellung verfügen, kann vorgesehen sein, die Messerspaltverstellung automatisch in Abhängigkeit der Dicke des Metallbandes durchzuführen.

Die Erfindung wird nachstehend anhand eines in den beigefügten Figuren dargestellten Ausführungsbeispiels erläutert.

Es zeigen:
- Figur 1: eine schematische Darstellung des Trennsystems gemäß der Erfindung einer ersten Betriebsstellung innerhalb einer Walzstraße,
- Figur 2: eine schematische Darstellung des in Figur 1 gezeigten Trennsystems in einer zweiten Betriebsstellung,
- Figur 3: eine schematische Darstellung eines Trennsystems, mit einem Zwischenrollgang in einer ersten Betriebsstellung,
- Figur 4: eine schematische Darstellung des in Figur 3 gezeigten Trennsystems in einer zweiten Betriebsstellung und
- Figur 5: eine schematische Darstellung des in Figur 3 gezeigten Trennsystems in einer dritten Betriebsstellung.

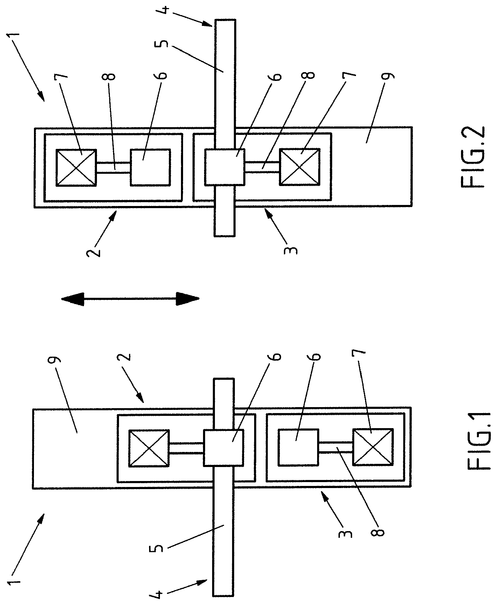

Das Trennsystem 1 gemäß der Erfindung umfasst eine erste Trenneinrichtung 2 und eine zweite Trenneinrichtung 3, die an gegenüberliegenden Seiten auf gleicher Höhe an einer Walzstraße 4 angeordnet sind. Die Walzstraße 4 ist beispielsweise als Gießwalzanlage ausgebildet. Die Laufrichtung eines zu walzenden Metallbandes 5 ist mittels des Pfeils in Figur 1 angedeutet.

Die erste Trenneinrichtung 2 umfasst als Werkzeug eine Schere 6 mit einem Antrieb 7, einem nicht näher bezeichneten Getriebe sowie eine Kupplung 8. Die erste Trenneinrichtung 2 ist vorzugsweise als Trommelschere ausgebildet.

Die zweite Trenneinrichtung 3 umfasst ebenfalls als Werkzeug eine Schere 6 mit einem Antrieb 7, einem nicht näher bezeichneten Getriebe sowie einer Kupplung 8. Die zweite Trenneinrichtung 3 ist als Hochgeschwindigkeits-Trommelschere ausgebildet.

Die erste und die zweite Trenneinrichtung 2, 3 sind jeweils auf einer sich quer zu der Walzstraße 4 bzw. zu der durch die Erstreckung der Walzstraße 4 definierten Walzlinie erstreckenden Fahrbahn 9 angeordnet. Auf dieser Fahrbahn 9 sind die erste und die zweite Trenneinrichtung quer zur Laufrichtung des Metallbandes 5 mittels eines an und für sich bekannten Querverschiebesystems (nicht bezeichnet) wechselweise in die Walzlinie einfahrbar bzw. ausfahrbar. Das Trennsystem 1 als Vorrichtung zum Querteilen des Metallbandes 5 im Sinne der vorliegenden Erfindung ist in Figur 1 in einer ersten Betriebsstellung gezeigt, in der die erste Trenneinrichtung 2 in die Walzlinie bzw. in die Walzstraße 4 eingeschoben ist. Bei einem Materialwechsel mit einer anderen Banddicke und/oder anderen Bandgeschwindigkeit kann eine nicht dargestellte Steuereinrichtung über ein nicht dargestelltes Querverschiebesystem ein Einschieben der zweiten Trenneinrichtung 3 in die Walzlinie veranlassen, wie dies beispielsweise in Figur 2 gezeigt ist. Die erste und die zweite Trenneinrichtung 2, 3 können miteinander so gekoppelt sein, dass diese mit an gegenüberliegenden Seiten jeweils vorgesehenen hydraulischen Zylindern wechselweise in die Walzlinie eingeschoben bzw. aus der Walzlinie herausgezogen werden können.

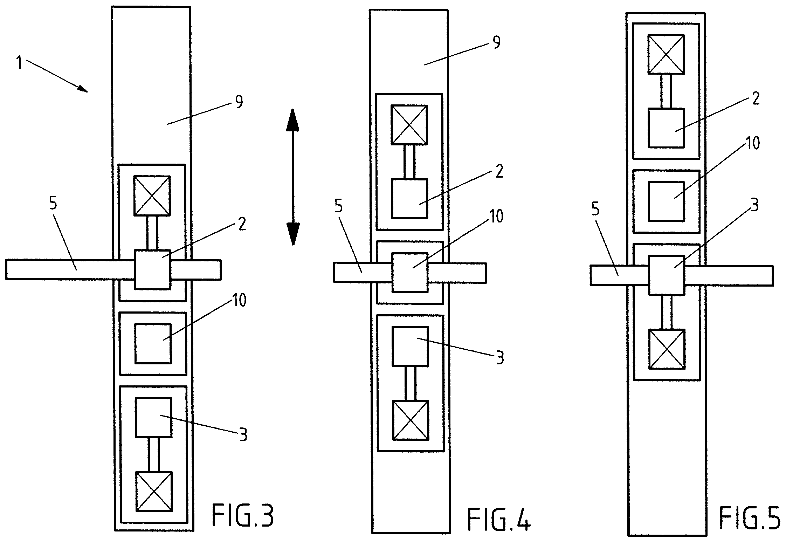

Eine Variante der Vorrichtung und des Verfahrens gemäß der Erfindung ist in den Figuren 3 bis 5 dargestellt. Bei dieser Variante sind gleiche Bauteile mit gleichen Bezugszeichen versehen.

Das in den Figuren 3 bis 5 dargestellte Trennsystem unterscheidet sich von demjenigen gemäß der Figuren 2 und 3 dadurch, dass zusätzlich zu der ersten und zweiten Trenneinrichtung 2, 3 ein dazwischen angeordneter Zwischenrollgang 10 vorgesehen ist. Die erste und zweite Trenneinrichtung 2, 3 sowie der Zwischenrollgang 10 sind, ebenso wie bei dem ersten Ausführungsbeispiel auf einer sich quer zur Walzlinie erstreckenden Fahrbahn 9 angeordnet und in gleicher Art und Weise wie bei dem Ausführungsbeispiel gemäß Figuren 1 und 2 verschiebbar bzw. verfahrbar. Die Figur 3 zeigt eine Betriebsstellung des Trennsystems, bei welcher die erste Trenneinrichtung 2 in die Walzlinie eingefahren ist. Diese Betriebsstellung entspricht derjenigen gemäß Figur 1.

In Figur 4 ist einer Zwischenstellung des Trennsystems dargestellt, in der der Zwischenrollgang 10 in die Walzlinie eingefahren ist. Diese Betriebsstellung zeigt einen Durchlaufbetrieb, bei dem kein Querteilen des Metallbandes 5 vorgesehen ist.

Figur 5 zeigt eine weitere Betriebsstellung des Trennsystems, bei dem entsprechend der in Figur 2 gezeigten Betriebsstellung die zweite Trenneinrichtung 3 in die Walzlinie eingefahren ist.

### Bezugszeichenliste

- 1: Trennsystem
- 2: erste Trenneinrichtung
- 3: zweite Trenneinrichtung
- 4: Walzstraße
- 5: Metallband
- 6: Schere
- 7: Antrieb
- 8: Kupplung
- 9: Fahrbahn
- 10: Zwischenrollgang

## Patentansprüche

1. Vorrichtung zum Querteilen eines Metallbandes (5) in einer Walzstraße (4) umfassend Mittel zur Bestimmung der Dicke und/oder der Geschwindigkeit des Metallbandes (5), eine erste Trenneinrichtung (2) und wenigstens eine zweite Trenneinrichtung (2), die für unterschiedliche Schnittanforderungen ausgelegt sind, Mittel zur Auswahl und Inbetriebnahme der ersten und/oder zweiten Trenneinrichtung (2,3) in Abhängigkeit der Dicke und/oder Geschwindigkeit des Metallbandes (5), **dadurch gekennzeichnet, dass** die erste und die zweite Trenneinrichtung (2,3) quer zur Laufrichtung des Metallbandes (5) verfahrbar oder verschiebbar angeordnet sind und dass die erste und zweite Trenneinrichtung (2,3) wahlweise oder wechselweise in die Walzlinie einfahrbar oder einschiebbar und/oder ausfahrbar oder ausschiebbar ausgebildet sind.

2. Vorrichtung nach Anspruch 1, **dadurch gekennzeichnet, dass** die erste und die zweite Trenneinrichtung (2,3) gleichzeitig oder wechselweise neben der Walzlinie in eine Parkposition verfahrbar sind.

3. Vorrichtung nach einem der Ansprüche 1 oder 2 **dadurch gekennzeichnet, dass** die erste und die zweite Trenneinrichtung (2,3) aus der Walzlinie an gegenüberliegende Seiten der Walzstraße (4) neben die Walzlinie verfahrbar sind.

4. Vorrichtung nach einem der Ansprüche 1 oder 2, **dadurch gekennzeichnet, dass** die erste und die zweite Trenneinrichtung (2,3) aus der Walzlinie an eine einzige Seite der Walzstraße (4) derart verfahrbar sind, dass sie parallel zur Walzlinie nebeneinander angeordnet sind.

5. Vorrichtung nach einem der Ansprüche 1 bis 4 **dadurch gekennzeichnet, dass** die erste und die zweite Trenneinrichtung (2,3) ausgewählt sind aus einer Gruppe von Trenneinrichtungen umfassend Trommelscheren, die als Querteiler und/oder als Schopfscheren und/oder als Häcksler ausgebildet sind, Trommelscheren, die als Hochgeschwindigkeitsscheren ausgebildet sind, Pendelscheren, Brennschneideinrichtungen und Kurbelscheren.

6. Vorrichtung nach einem der Ansprüche 1 bis 5, **dadurch gekennzeichnet, dass** die erste Trenneinrichtung (2) als Trommelschere für eine Banddicke von 6 bis 28 mm bei einer Bandgeschwindigkeit von kleiner gleich 2,5 m/s ausgebildet ist und dass die zweite Trenneinrichtung (3) als Hochgeschwindigkeits-Trommelschere für eine Banddicke von 0,6 bis 6 mm bei der Bandgeschwindigkeit von 2,5 bis 20 m/s ausgelegt ist.

7. Vorrichtung nach einem der Ansprüche 1 bis 6, **dadurch gekennzeichnet, dass** in der Walzstraße (4) wenigstens eine sich quer zur Walzlinie erstreckende Fahrbahn (9) vorgesehen ist, durch die die erste oder zweite Trenneinrichtung (2,3) in die Walzlinie einfahrbar oder ausfahrbar ist.

8. Vorrichtung nach einem der Ansprüche 1 bis 7, **dadurch gekennzeichnet, dass** die erste und die zweite Trenneinrichtung (2,3) mittels wenigstens eines vorzugsweise hydraulischen Querverschiebesystems verfahrbar sind.

9. Vorrichtung nach einem der Ansprüche 1 bis 8 **dadurch gekennzeichnet, dass** in Laufrichtung des Metallbandes (5) vor und/oder hinter den ersten und zweiten Trenneinrichtungen (2,3) wenigstens eine Treibereinrichtung, insbesondere wenigstens eine Treiberrolleneinheit vorgesehen ist.

10. Vorrichtung nach einem der Ansprüche 1 bis 9, **dadurch gekennzeichnet, dass** in Laufrichtung des Metallbandes (5) vor und/oder hinter den ersten und zweiten Trenneinrichtungen (2,3) Führungseinrichtungen vorgesehen sind, die ein Anheben des Metallbandes (5) beim Trennen verhindern.

11. Vorrichtung nacheinem der Ansprüche 1 bis 10, **dadurch gekennzeichnet, dass** anstelle der Trenneinrichtungen (2, 3) ein Zwischenrollgang (10) in die Walzlinie eingefahren wird.

12. Verfahren zum Querteilen eines Metallbandes in einer Walzstraße unter Verwendung einer Vorrichtung mit den Merkmalen eines der Ansprüche 1 bis 11, wobei das Verfahren eine Bestimmung der Dicke und/oder Geschwindigkeit und/oder Beschaffenheit des Metallbandes umfasst, wobei in Abhängigkeit der Bandgeschwindigkeit und/oder der Banddicke und/oder Beschaffenheit des Metallbandes die erste oder die zweite Trenneinrichtung ausgewählt und in die Walzlinie eingefahren wird.

13. Verfahren nach Anspruch 12 **dadurch gekennzeichnet, dass** das Verfahren die automatische Einstellung des Bandzuges in Abhängigkeit der ausgewählten Trenneinrichtung umfasst.

14. Verfahren nach Anspruch 13, **dadurch gekennzeichnet, dass** der Bandzug vor und/oder hinter den Trenneinrichtungen mittels wenigstens einer Treibereinrichtung eingestellt wird.

15. Verfahren nach einem der Ansprüche 12 bis 14, **dadurch gekennzeichnet, dass** mittels wenigstens eines Steuerungssystems in Abhängigkeit der gewählten Trenneinrichtung und des durchzuführenden Schnitts der Zeitpunkt für das in- und außer Eingriff bringen der Treibereinrichtung gesteuert wird.
